# EUROPÄISCHE PATENTSCHRIFT

(11) **EP 2 507 247 B1**
(45) Veröffentlichungstag und Bekanntmachung des Hinweises auf die Patenterteilung: **05.08.2015**
(21) Anmeldenummer: 10784505.9
(22) Anmeldetag: 25.11.2010
(51) Int. Cl.: C07F 1/00, C07F 3/00, C07F 5/06, C07F 15/02, B01D 53/00

(54) **METALLORGANISCHE GERÜSTMATERIALIEN BASIEREND AUF 2,5-FURANDICARBONSÄURE ODER 2,5-THIOPHENDICARBONSÄURE**
METAL-ORGANIC FRAMEWORK MATERIALS BASED ON 2,5-FURANDICARBOXYLIC ACID OR 2,5-THIOPHENEDICARBOXYLIC ACID
MATÉRIAUX DE SQUELETTE MÉTALLO-ORGANIQUES À BASE D'ACIDE 2,5-FURANEDICARBOXYLIQUE OU D'ACIDE 2,5-THIOPHÈNEDICARBOXYLIQUE

(30) Priorität: 30.11.2009 EP 09177495
(43) Veröffentlichungstag der Anmeldung: 10.10.2012
(73) Patentinhaber: BASF SE, 67056 Ludwigshafen (DE)
(72) Erfinder: TRUKHAN, Natalia, 67071 Ludwigshafen (DE); MÜLLER, Ulrich, 67435 Neustadt (DE); HEIMANN, Jens, 67550 Worms (DE); KINDLER, Alois, 67269 Grünstadt (DE)
(86) Internationale Anmeldenummer: PCT/EP2010/068234
(87) Internationale Veröffentlichungsnummer: WO 2011/064307

(56) Entgegenhaltungen:
- WO-A2-2007/044473
- WO-A2-2008/057140
- JIA, H.-P- ET AL.: "Synthesis, structure and magnetism of metal-organic framework materials with doubly pillared layers", EUROPEAN JOURNAL OF INORGANIC CHEMISTRY, 2006, Seiten 4264-4270, XP002617083,

## Beschreibung

Die vorliegende Erfindung betrifft ein poröses metallorganisches Gerüstmaterial, Formkörper dieses enthaltend, Verfahren zur dessen Herstellung sowie dessen Verwendung.

Poröse metallorganische Gerüstmaterialien sind aus dem Stand der Technik bekannt. Sie zeichnen sich insbesondere durch ihre Porosität aus und sind häufig vergleichbaren Anwendungen zuführbar, welche von anorganischen Zeolithen bekannt sind.

WO 2008/057140 A2 bezieht sich auf die mikrowellenunterstützte Synthese von metallorganischen Gerüstmaterialien.

WO 2007/044473 A2 bezieht sich auf ein analytisches Verfahren, wobei ein metallorganisches Gerüstmaterial als Sorptionsmittel verwendet wird.

Jia et al. (Eur. J. Inorg. Chem. 2006, Seiten 4266 bis 4270) beschreibt Synthese, Struktur und magnetische Eigenschaften von metallorganischen Gerüstmaterialien.)

Metallorganische Gerüstmaterialien enthalten üblicherweise eine an ein Metallion koordinativ gebundene, mindestens zweizähnige organische Verbindung, die verbrückend mindestens zwei Metallionen miteinander verbindet und somit gemeinsam mit den Metallionen das Gerüst des metallorganischen Gerüstmaterials darstellt.

Die geeignete Wahl von Metall und/oder organischer Verbindung ermöglicht eine Optimierung für das gewünschte Anwendungsgebiet. Hierbei kann beispielsweise die Wahl der organischen Verbindung Einfluss auf die Porenverteilung nehmen. Darüber hinaus kann das Metall einen Beitrag bei Adsorptionsvorgängen liefern.

Es existiert also ein stetiger Bedarf spezielle metallorganische Gerüstmaterialien bereitzustellen, die insbesondere außergewöhnliche Eigenschaften aufweisen, welche auf die Wahl des Metalls sowie der organischen Verbindung zurückzuführen sind.

Eine Aufgabe der vorliegenden Erfindung besteht somit darin, solche Materialien, Verfahren zur deren Herstellung sowie Verwendungen für diese bereitzustellen.

Die Aufgabe wird gelöst durch ein poröses metallorganisches Gerüstmaterial enthaltend mindestens eine an mindestens ein Metallion koordinativ gebundene mindestens zweizähnige organische Verbindung, wobei sich die mindestens eine mindestens zweizähnige organische Verbindung von 2,5-Furandicarbonsäure oder 2,5-Thiophendicarbonsäure ableitet, und das mindestens eine Metallion das Ion eines Metalles ausgewählt aus der Gruppe bestehend aus Al, Mg, und Zn ist.

Es hat sich gezeigt, dass das erfindungsgemäße metallorganische Gerüstmaterial insbesondere für Anwendungen zur Trennung von CO₂/CO, CH₄/H₂O und/oder die Speicherung von Wasserstoff geeignet sein kann.

Die erfindungsgemäßen porösen metallorganischen Gerüstmaterialien weisen die oben aufgeführten typischen Eigenschaften metallorganischer Gerüstmaterialien auf. Hierbei enthalten die erfindungsgemäßen porösen metallorganischen Gerüstmaterialien als mindestens zweizähnige organische Verbindung 2,5-Furandicarbonsäure oder 2,5-Thiophendicarbonsäure beziehungsweise leiten sich von diesen ab.

Der Begriff "ableiten" bedeutet im Rahmen der vorliegenden Erfindung, dass 2,5-Furandicarbonsäure beziehungsweise 2,5-Thiophendicarbonsäure im Gerüstmaterial in teilweiser deprotonierter oder vollständig deprotonierter Form vorliegen kann. Weiterhin kann 2,5-Furandicarbonsäure bziehungsweise 2,5-Thiophendicarbonsäure einen Substituenten oder unabhängig voneinander mehrere Substituenten enthalten. Beispiele für solche Substituenten sind OH, NH₂, OCH₃, CH₃, NH(CH₃), N(CH₃)₂, CN sowie Halogenide. Vorzugsweise leitet sich jedoch die mindestens zweizähnige organische Verbindung von unsubstituierter 2,5-Furandicarbonsäure beziehungsweise 2,5-Thiophendicarbonsäure ab. Darüber hinaus bedeutet der Begriff "ableiten" im Rahmen der vorliegende Erfindung, dass eine oder mehrere Carbonsäurefunktionen in Form eines entsprechenden Schwefelanalogons vorliegen kann. Schwefelanalogons sind die funktionellen Gruppen C(=O)SH sowie dessen Tautomer und C(=S)SH, die anstelle einer oder beider Carbonsäuregruppen eingesetzt werden können. Vorzugsweise sind jedoch keine Schwefelanaloga eingesetzt.

Die Metallkomponente im Gerüstmaterial nach der vorliegenden Erfindung ist ausgewählt aus der Gruppe bestehend aus Al, Mg, und Zn.

In Bezug auf die Ionen dieser Elemente sind besonders zu erwähnen Mg²⁺, Zn²⁺ und Al³⁺.

Insbesondere ist Al bevorzugt.

Das erfindungsgemäße Verfahren zur Herstellung eines erfindungsgemäßen Gerüstmaterials enthält als Schritt (a) das Umsetzen einer Reaktionslösung, enthaltend ein dem mindestens einen Metallion entsprechendes Metallsalz und 2,5-Furandicarbonsäure bzw. 2,5-Thiophendicarbonsäure sowie einem Lösemittel, bei einer Temperatur im Bereich von 100°C bis 150°C für mindestens 3 Stunden und (b) Abtrennen des ausgefallenen Feststoffes.

Bevorzugt erfolgt die Umsetzung zumindest zeitweise, insbesondere zu Beginn der Umsetzung, unter Rühren.

Als eine Ausgangsverbindung wird ein Metallsalz verwendet. Vorzugsweise liegt dessen Anfangskonzentration im Reaktionsgemisch im Bereich von 0,05 mol/l bis 0,8 mol/l. Weiterhin bevorzugt liegt die Anfangskonzentration im Bereich von 0,1 mol/l bis 0,5 mol/l. Insbesondere liegt die Anfangskonzentration im Bereich von 0,15 mol/l bis 0,3 mol/l.

Die Menge an Metallsalz wird dabei in einer Menge der Reaktionslösung zugeführt, so dass aufgrund des ausgefallenen Feststoffes in Schritt (b) die Metallionenkonzentration in der Reaktionslösung abnimmt.

Darüber hinaus ist es bevorzugt, dass das Verhältnis der anfänglichen Stoffmenge an eingesetzter 2,5-Furandicarbonsäure beziehungsweise 2,5-Thiophendicarbonsäure zur anfänglichen Stoffmenge an eingesetztem Metallsalz bezogen auf das Metall im Bereich von 0,5:1 bis 2:1 liegt. Weiterhin bevorzugt liegt das Verhältnis im Bereich von 1:1 bis 1,8:1, weiterhin bevorzugt im Bereich von 1:1 bis 1,7:1.

Das Reaktionsgemisch für Schritt (a) des erfindungsgemäßen Verfahrens zur Herstellung des erfindungsgemäßen Gerüstmaterials enthält weiterhin ein Lösemittel.

Das Lösemittel muss geeignet sein, die eingesetzten Ausgangsstoffe zumindest teilweise in Lösung zu bringen. Darüber hinaus muss das Lösemittel derart gewählt werden, dass der erforderliche Temperaturbereich eingehalten werden kann.

Die Umsetzung in dem erfindungsgemäßen Verfahren zur Herstellung des erfindungsgemäßen Materials erfolgt somit in Gegenwart eines Lösemittels. Hierbei können Solvothermalbedingungen eingesetzt werden. Unter dem Begriff "thermal" ist im Rahmen der vorliegenden Erfindung ein Herstellverfahren zu verstehen, bei dem die Umsetzung in einem Druckbehälter derart durchgeführt wird, dass dieser während der Umsetzung verschlossen ist und erhöhte Temperatur angelegt wird, so dass aufgrund des Dampfdruckes von vorhandenem Lösemittel sich ein Druck innerhalb des Reaktionsmediums im Druckbehälter aufbaut. Hierdurch kann die gewünscht Umsetzungstemperatur gegebenenfalls erreicht werden.

Vorzugsweise erfolgt die Umsetzung nicht in Wasser enthaltendem Medium und ebenso nicht unter Solvothermalbedingungen.

Die Umsetzung in dem erfindungsgemäßen Verfahren erfolgt demzufolge vorzugsweise in Gegenwart eines nicht-wässrigen Lösemittels.

Die Umsetzung erfolgt vorzugsweise bei einem Druck von höchstens 2 bar (absolut). Vorzugsweise beträgt der Druck jedoch höchstens 1230 mbar (absolut). Insbesondere bevorzugt findet die Umsetzung bei Atmosphärendruck statt. Hierbei kann es jedoch apparativ bedingt zu leichten Über- oder Unterdrücken kommen. Daher ist im Rahmen der vorliegenden Erfindung unter dem Begriff "Atmosphärendruck" derjenige Druckbereich zu verstehen, der sich aus dem tatsächlichen vorliegenden Atmosphärendruck ± 150 mbar ergibt.

Die Umsetzung findet in einem Temperaturbereich von 100°C bis 150°C statt. Vorzugsweise liegt die Temperatur im Bereich von 115°C bis 140°C. Weiterhin bevorzugt liegt die Temperatur in einem Bereich von 120°C bis 130°C.

Die Reaktionslösung kann weiterhin eine Base aufweisen. Dies dient insbesondere dazu, dass bei Einsatz der Säure diese leicht löslich ist. Durch die Verwendung eines organischen Lösemittels ist es häufig nicht erforderlich, eine solche Base einzusetzen. Nichts desto trotz kann das Lösemittel für das erfindungsgemäße Verfahren derart gewählt werden, dass dieses als solche basisch reagiert, was jedoch nicht zwingend für die Durchführung des erfindungsgemäßen Verfahrens sein muss.

Ebenso kann eine Base eingesetzt werden. Bevorzugt ist jedoch, dass keine zusätzliche Base eingesetzt wird.

Es ist weiterhin vorteilhaft, dass die Umsetzung unter Rühren stattfinden kann, was auch bei einem Scale-up vorteilhaft ist.

Das (nicht-wässrige) organische Lösemittel ist vorzugsweise ein C₁₋₆-Alkanol, Dimethylsulfoxid (DMSO), N,N-Dimethylforniamid (DMF), N,N-Diethylformamid (DEF), N,N-Dimethylacetamid (DMAc), Acetonitril, Toluol, Dioxan, Benzol, Chlorbenzol, Methylethylketon (MEK), Pyridin, Tetrahydrofuran (THF), Essigsäureethylester, gegebenenfalls halogeniertes C₁₋₂₀₀-Alkan, Sulfolan, Glykol, N-Methylpyrrolidon (NMP), gamma-Butyrolacton, alicyclische Alkohole wie Cyclohexanol, Ketone, wie Aceton oder Acetylaceton, Cycloketone, wie Cyclohexanon, Sulfolen oder Mischungen davon.

Ein C₁₋₆-Alkanol bezeichnet einen Alkohol mit 1 bis 6 C-Atomen. Beispiele hierfür sind Methanol, Ethanol, n-Propanol, i-Propanol, n-Butanol, i-Butanol, t-Butanol, Pentanol, Hexanol sowie Gemische davon.

Ein gegebenenfalls halogeniertes C₁₋₂₀₀-Alkan bezeichnet ein Alkan mit 1 bis 200 C-Atomen, wobei ein oder mehrere bis hin zu allen Wasserstoffatomen durch Halogen, vorzugsweise Chlor oder Fluor, insbesondere Chlor, ersetzt sein kann bzw. können. Beispiele hierfür sind Chloroform, Dichlormethan, Tetrachlormethan, Dichlorethan, Hexan, Heptan, Oktan sowie Gemische davon.

Bevorzugte Lösemittel sind DMF, DEF, DMAc und NMP. Besonders bevorzugt ist DMF.

Der Begriff "nicht-wässrig" bezieht sich vorzugsweise auf ein Lösemittel, das einen Höchstwassergehalt von 10 Gew.-%, mehr bevorzugt 5 Gew.-%, weiterhin mehr bevorzugt 1 Gew.-%, weiterhin bevorzugt 0,1 Gew.%, besonders bevorzugt 0,01 Gew.-% bezogen auf das Gesamtgewicht des Lösemittels nicht überschreitet.

Vorzugsweise beträgt der Höchstwassergehalt während der Umsetzung 10 Gew.-%, mehr bevorzugt 5 Gew.% und weiterhin mehr bevorzugt 1 Gew.-%.

Der Begriff "Lösemittel" betrifft reine Lösemittel sowie Gemische von unterschiedlichen Lösemitteln.

Schritt (a) dieser erfindungsgemäßen Verfahren zur Herstellung des erfindungsgemäßen Gerüstmaterials wird für mindestens 3, Stunden durchgeführt. Vorzugsweise erfolgt die Umsetzung mindestens 6 Stunden, weiter bevorzugt mindestens 12 stunden, weiter bevorzugt mindestens 18 Stunden lang.

Weiterhin weist das erfindungsgemäße Verfahren den Schritt (b), Abtrennen des ausgefallenen Feststoffes, auf.

Aufgrund von Schritt (a) des erfindungsgemäßen Herstellverfahrens fällt das Gerüstmaterial als Feststoff aus dem Reaktionsgemisch aus. Eine Abtrennung erfolgt durch im Stand der Technik bekannte Methoden, wie Filtration oder dergleichen.

Das erfindungsgemäße metallorganische Gerüstmaterial kann pulverförmig beziehungsweise als Agglomerat vorliegen.

Das erfindungsgemäße poröse metallorganische Gerüstmaterial kann als solches in Pulverform verwendet werden oder es wird in einen Formkörper umgewandelt.

Dementsprechend ist ein weiterer Aspekt der vorliegenden Erfindung, dass das erfindungsgemäße poröse metallorganische Gerüstmaterial als Pulver vorliegt.

Ein weiterer Aspekt der vorliegenden Erfindung ist demzufolge ein Formkörper enthaltend das erfindungsgemäße poröse metallorganische Gerüstmaterial.

Die Herstellung von Formkörpern aus metallorganischen Gerüstmaterialien ist beispielsweise in WO-A 03/102000 beschrieben.

Bevorzugte Verfahren zur Herstellung von Formkörpern sind hierbei die Verstrangung oder Tablettierung. Bei der Formkörperherstellung kann das Gerüstmaterial weitere Materialien, wie beispielsweise Binder, Gleitmittel oder andere Additive aufweisen, welche während der Herstellung hinzugesetzt werden. Ebenso ist es denkbar, dass das Gerüstmaterial weitere Bestandteile aufweist, wie zum Beispiel Adsorbentien wie Aktivkohle oder dergleichen.

Hinsichtlich der möglichen Geometrien der Formkörper existieren im Wesentlichen keine Beschränkungen. Beispielsweise sind unter anderem Pellets wie beispielsweise scheibenförmige Pellets, Pillen, Kugeln, Granulat, Extrudate wie beispielsweise Stränge, Waben, Gitter oder Hohlkörper zu nennen.

Zur Herstellung dieser Formkörper sind grundsätzlich sämtliche geeigneten Verfahren möglich. Es sind insbesondere folgende Verfahrensführungen bevorzugt:
- Kneten/Kollern des Gerüstmaterials allein oder zusammen mit mindestens einem Bindemittel und/oder mindestens einem Anteigungsmittel und/oder mindestens einer Templatverbindung unter Erhalt eines Gemisches; Verformen des erhaltenen Gemisches mittels mindestens einer geeigneten Methode wie beispielsweise Extrudieren; Optional Waschen und/oder Trocknen und/oder Calcinieren des Extrudates; Optional Konfektionieren.
- Tablettieren zusammen mit mindestens einem Bindemittel und/oder anderem Hilfsstoff.
- Aufbringen des Gerüstmaterials auf mindestens ein gegebenenfalls poröses Trägermaterial. Das erhaltene Material kann dann gemäß der vorstehend beschriebenen Methode zu einem Formkörper weiterverarbeitet werden.
- Aufbringen des Gerüstmaterials auf mindestens ein gegebenenfalls poröses Substrat.

Kneten/Kollern und Verformen kann gemäß eines jeden geeigneten Verfahrens erfolgen, wie beispielsweise in Ullmanns Enzyklopädie der Technischen Chemie, 4. Auflage, Band 2, S. 313 ff. (1972) beschrieben.

Beispielsweise kann das Kneten/Kollern und/oder Verformen mittels einer Kolbenpresse, Walzenpresse in Anwesenheit oder Abwesenheit mindestens eines Bindermaterials, Compoundieren, Pelletieren, Tablettieren, Extrudieren, Co-Extrudieren, Verschäumen, Verspinnen, Beschichten, Granulieren, bevorzugt Sprühgranulieren, Versprühen, Sprühtrocknen oder einer Kombination aus zwei oder mehr dieser Methoden erfolgen.

Ganz besonders bevorzugt werden Pellets und/oder Tabletten hergestellt.

Das Kneten und/oder Verformen kann bei erhöhten Temperaturen wie beispielsweise im Bereich von Raumtemperatur bis 300°C und/oder bei erhöhtem Druck wie beispielsweise im Bereich von normaldruck bis hin zu einigen hundert bar und/oder in einer Schutzgasatmosphäre wie beispielsweise in Anwesenheit mindestens eines Edelgases, Stickstoff oder einem Gemisch aus zwei oder mehr davon erfolgen.

Das Kneten und/oder Verformen wird gemäß einer weiteren Ausführungsform unter Zugabe mindestens eines Bindemittels durchgeführt, wobei als Bindemittel grundsätzlich jede chemische Verbindung eingesetzt werden kann, die die zum Kneten und/oder Verformen gewünschte Viskosität der zu verknetenden und/oder verformenden Masse gewährleistet. Demgemäß können Bindemittel im Sinne der vorliegenden Erfindung sowohl Viskositätserhöhende als auch Viskositätserniedrigende Verbindungen sein.

Als unter anderem bevorzugte Bindemittel sind beispielsweise Aluminiumoxid oder Aluminiumoxid enthaltende Binder, wie sie beispielsweise in der WO 94/29408 beschrieben sind, Siliciumdioxid, wie es beispielsweise in der EP 0 592 050 A1 beschrieben ist, Mischungen ais Siliciumdioxid und Aluminiumoxid, wie sie beispielsweise in der WO 94/13584 beschrieben sind, Tonminerale, wie sie beispielsweise in der JP 03-037156 A beschrieben sind, beispielsweise Montmorillonit, Kaolin, Bentonit, Halloysit, Dickit, Nacrit und Anauxit, Alkoxysilane, wie sie beispielsweise in der EP 0 102 544 B1 beschrieben sind, beispielsweise Tetraalkoxysilane wie beispielsweise Tetramethoxysilan, Tetraethoxysilan, Tetrapropoxysilan, Tetrabutoxysilan, oder beispielsweise Trialkoxysilane wie beispielsweise Trimethoxysilan, Triethoxysilan, Tripropoxysilan, Tributoxysilan, Alkoxytitanate, beispielsweise Tetraalkoxytitanate wie beispielsweise Tetramethoxytitanat, Tetraethoxytitanat, Tetrapropoxytitanat, Tetrabutoxytitanat, oder beispielsweise Trialkoxytitanate wie beispielsweise Trimethoxytitanat, Triethoxytitanat, Tripropoxytitanat, Tributoxytitanat, Alkoxyzirkonate, beispielsweise Tetraalkoxyzirkonate wie beispielsweise Tetramethoxyzirkonat, Tetraethoxyzirkonat, Tetrapropoxyzirkonat, Tetrabutoxyzirkonat, oder beispielsweise Trialkoxyzirkonate wie beispielsweise Trimethoxyzirkonat, Triethoxyzirkonat, Tripropoxyzirkonat, Tributoxyzirkonat, Silikasole, amphiphile Substanzen und/oder Graphite zu nennen.

Als viskositätssteigernde Verbindung kann beispielsweise auch, gegebenenfalls zusätzlich zu den oben genannten Verbindungen, eine organische Verbindung und/oder ein hydrophiles Polymer wie beispielsweise Cellulose oder ein Cellulosederivat wie beispielsweise Methylcellulose und/oder ein Polyacrylat und/oder ein Polymethacrylat und/oder ein Polyvinylalkohol und/oder ein Polyvinylpyrrolidon und/oder ein Polyisobuten und/oder ein Polytetrahydrofuran und/oder ein Polyethylenoxid eingesetzt werden.

Als Anteigungsmittel kann unter anderem bevorzugt Wasser oder mindestens ein Alkohol wie beispielsweise ein Monoalkohol mit 1 bis 4 C-Atomen wie beispielsweise Methanol, Ethanol, n-Propanol, iso-Propanol, 1-Butanol, 2-Butanol, 2-Methyl-1-propanol oder 2-Methyl-2-propanol oder ein Gemisch aus Wasser und mindestens einem der genannten Alkohole oder ein mehrwertiger Alkohol wie beispielsweise ein Glykol, bevorzugt ein wassermischbarer mehrwertiger Alkohol, allein oder als Gemisch mit Wasser und/oder mindestens einem der genannten einwertigen Alkohole eingesetzt werden.

Weitere Additive, die zum Kneten und/oder Verformen eingesetzt werden können, sind unter anderem Amine oder Aminderivate wie beispielsweise Tetraalkylammonium-Verbindungen oder Aminoalkohole und Carbonat enthaltende Verbindungen wie etwa Calciumcarbonat. Solche weiteren Additive sind etwa in der EP 0 389 041 A1, der EP 0 200 260 A1 oder der WO 95/19222 beschrieben.
Die Reihenfolge der Additive wie Templatverbindung, Binder, Anteigungsmittel, viskositätssteigernde Substanz beim Verformen und Kneten ist grundsätzlich nicht kritisch.

Gemäß einer weiteren bevorzugten Ausführungsform wird der gemäß Kneten und/oder Verformen erhaltene Formkörper mindestens einer Trocknung unterzogen, die im Allgemeinen bei einer Temperatur im Bereich von 25 bis 500°C, bevorzugt im Bereich von 50 bis 500°C und besonders bevorzugt im Bereich von 100 bis 350°C durchgeführt wird. Ebenso ist es möglich, im Vakuum oder unter Schutzgasatmosphäre oder durch Sprühtrocknung zu trocknen.

Gemäß einer besonders bevorzugten Ausführungsform wird im Rahmen dieses Trocknungsvorgangs mindestens eine der als Additive zugesetzten Verbindungen zumindest teilweise aus dem Formkörper entfernt.

Das erfindungsgemäße metallorganische Gerüstmaterial sowie der erfindungsgemäße Formkörper eigen sich zur Speicherung eines Gases.

Dementsprechend ist ein Weiterer Aspekt der vorliegenden Erfindung deren Verwendung zur Speicherung eines Gases.

Dementsprechend ist ebenfalls ein weiterer Aspekt der vorliegenden Erfindung ein Verfahren zur Speicherung eines Gases den Schritt enthaltend, dass das Gas mit einem erfindungsgemäßen Gerüstmaterial oder einem erfindungsgemäßen Formkörper in Kontakt gebracht wird.

Für die Speicherung ist insbesondere Wasserstoff geeignet.

Darüber hinaus ist das erfindungsgemäße Gerüstmaterial beziehungsweise der erfindungsgemäße Formkörper zur Abtrennung eines Gases aus einem Gasgemisch geeignet.

Dementsprechend ist ein weiterer Aspekt der vorliegenden Erfindung die Verwendung eines erfindungsgemäßen Gerüstmaterials beziehungsweise eines erfindungsgemäßen Formkörpers zur Abtrennung eines Gases aus einem Gasgemisch.

Dementsprechend ist ebenfalls ein weiterer Aspekt der vorliegenden Erfindung ein Verfahren zur Abtrennung eines Gases aus einem Gasgemisch den Schritt enthaltend: in Kontakt bringen eines erfindungsgemäßen Gerüstmaterials oder eines erfindungsgemäßen Formkörpers mit dem Gasgemisch.

Bei dem Gasgemisch handelt es sich insbesondere um ein Gasgemisch, welches CO₂ und CO aufweist. Hier wird vorzugsweise CO₂ aus dem Gasgemisch entfernt.

Weiterhin kann es sich bei dem Gasgemisch um ein Gemisch handeln, das Methan und Wasser enthält. Vorzugsweise wird gasförmiges Wasser aus dem Gasgemisch entfernt. Bei dem Gasgemisch kann es sich beispielsweise um Wasser enthaltendes Erdgas handeln.

Die vorliegende Erfindung wird anhand der Figuren sowie den nachfolgenden Beispielen näher erläutert.

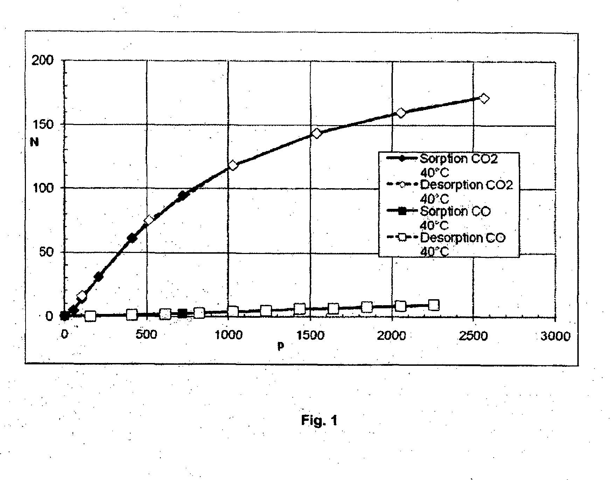

**Fig. 1** zeigt die Adsorption sowie die Desorption bei 40°C für ein erfindungsgemäßes metallorganisches Gerüstmaterial (Al-2,5-Furandicarbonsäure-MOF). Hierbei ist die Menge an adsorbiertem Gas (N) in mg pro Gramm Gerüstmaterial als Funktion des absoluten Drucks p in mbar dargestellt.
   Wie sich aus **Fig**. **1** ergibt, ist eine Abtrennung von CO₂ aufgrund der unterschiedlichen Adsorptionsisotherme möglich.

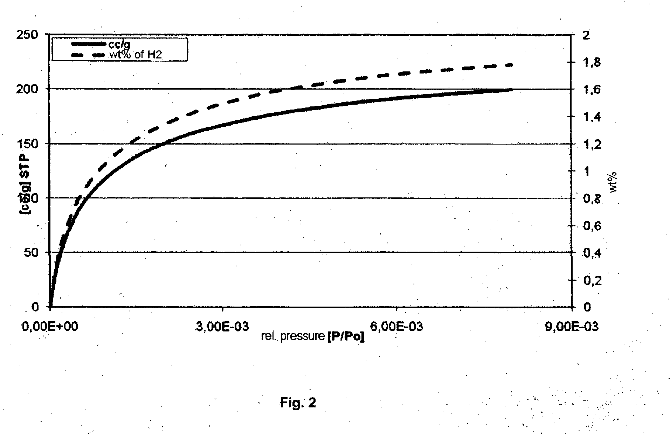

**Fig. 2** zeigt die Wasserstoffadsorption bei 77K für das Gerüstmaterial (Al-2,5-Furandicarbonsäure) gemäß Beispiel 1, wobei eine Voraktivierung von 4h bei 130°C erfolgt ist (P₀H₂ bei 77K=94632,4Tor). **Fig. 2** zeigt die absorbierte Menge an Wasserstoff (in cm³/gSTP) (linke Skala) beziehungsweise den Gewichtsanteil an Wasserstoff (Gew.-%) (rechte Skala) als Funktion des relativen Drucks p durch p0.

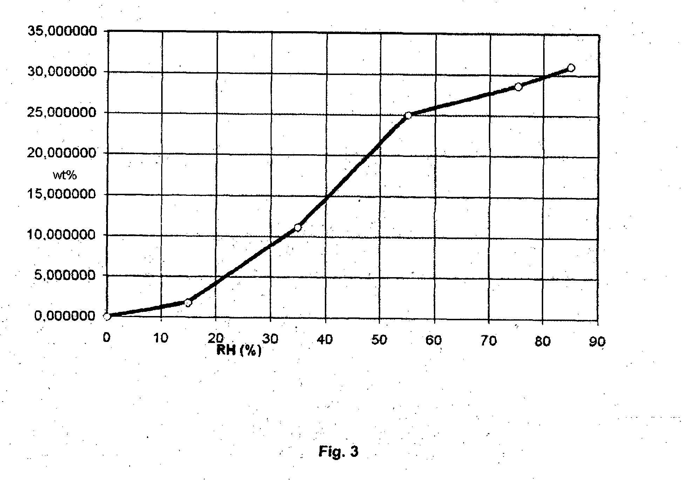

**Fig. 3** zeigt die Absorption gasförmigen Wassers von Al-2,5-Thiophendicarbonsäure-MOF bei verschiedenen relativen Feuchten (RH). Hierbei ist die Menge W in Gew.-% als Funktion von RH in % dargestellt.

### Beispiele

### Beispiel 1 Al-2,5-Furandicarbonsäure-MOF

### Versuchsvorschrift:

| **Einsatzstoff** | **Molar** | **berechnet** | **experimentell** |
|---|---|---|---|
| 1) Aluminiumchlorid*6Wasser | 48,75 mmol | 11,8g | 11,8g |
| 2) 2,5-Furandicarbonsäure | 82,87 mmol | 12,9g | 12,9g |
| 3) DMF | 6,8 mol | 500,0g | 500,0g |

In einem 2l Vierhalskolben wird die Furandicarbonsäure und das Aluminiumchlorid in dem DMF suspendiert. Die Lösung mit Feststoffanteil wird für 24h bei 130°C gekocht, wobei sich eine weiße Suspension bildet. Nach dem Abkühlen wird der weiße Niederschlag abfiltriert und 1-mal mit 200 ml DMF und 4-mal mit 200 ml Methanol gewaschen. Der Filterkuchen wird im Vakuum bei RT für 16h getrocknet.
Auswaage: 10,3g
Farbe: weiß
Feststoffkonzentration: 2,0%
Raumzeitausbeute: 19,6 kg/m²/d
Ausbeute auf Al: 91%

### Analysen:

Langmuir OF (Voraktivierung 130°C): 1153 m²/g (BET: 850 m²/g)

### Chemische Analyse:

| | |
|---|---|
| Chlor-Ion | 0.47 g/100g |
| Kohtenstoff | 34.7 g/100g |
| Sauerstoff | 51 g/100g |
| Stickstoff | 0.9 g/100g |
| Wasserstoff | 2.4 g/100g |
| AL | 11.7 g/100g |

H₂O Adsorption, RT, 75 % relative humidity: 35 wt%

### Beispiel 2 Mg-2,5-Furandicarbonsäure-MOF

### Versuchsvorschrift:

| **Einsatzstoff** | **Molar** | **berechnet** | **experimentell** |
|---|---|---|---|
| 1) Magnesiumnitrat*6Wasser | 73,1 mmol | 18,7g | 18,7g |
| 2) 2,5-Furandicarbonsäure | 82,87 mmol | 12,9g | 12,9g |
| 3) DMF | 6,8 mol | 500,0g | 500,0g |

In einem 1l Vierhalskolben wird die Furandicarbonsäure und das Magnesiumnitrat in dem DMF suspendiert. Die Lösung mit Feststoffanteil wird für 24h bei 130°C gekocht, wobei sich eine weiße Suspension bildet. Nach dem Abkühlen wird der weiße Niederschlag abfiltriert und 1-mal mit 200 ml DMF und 4-mal mit 200 ml Methanol gewaschen. Der Filterkuchen wird im Hochvakuum bei RT für 16h getrocknet.
Auswaage: 15,3g
Farbe: weiß
Feststoffkonzentration: 2,9%
Raumzeitausbeute: 29,3 kg/m²/d
Ausbeute auf Mg: 79,5%

### Chemische Analyse:

| | |
|---|---|
| Kohlenstoff | 43.2 g/100g |
| Sauerstoff | 38.7 g/100g |
| Stickstoff | 5.8 g/100g |
| Wasserstoff | 4.1 g/100g |
| Mg | 8.1 g/100g |

### H₂O Adsorption, RT, 75 % relative humidity: 41 wt%

### Beispiel 3 Fe-2,5-Furandicarbonsäure-MOF (nicht erfindungsgemäß)

### Versuchsvorschrift:

| **Einsatzstoff** | **Molar** | **berechnet** | **experimentell** |
|---|---|---|---|
| 1) Eisennitrat*9Wasser | 48,7mmol | 19,6g | 19,6g |
| 2) 2,5-Furandicarbonsäure | 82,87 mmol | 12,9g | 12,9g |
| 3) DMF | 6,8 mol | 500,0g | 500,0g |

In einem 1l Vierhalskolben wird die Furandicarbonsäure und das Eisennitrat in dem DMF suspendiert. Beim hoch heizen auf 130°C dickte die Lösung zu einem dunkelbraunem zähen Gel ein. Nach die Rührgeschwindigkeit erhöht wurde, verflüssigte sich das Gel leicht. Das Gel wird für 24h bei 130°C gekocht. Nach dem Abkühlen wird der dunkelbraune Niederschlag abfiltriert und 1-mal mit 200 ml DMF und 4-mal mit 200 ml Methanol gewaschen. Der Filterkuchen wird im Hochvakuum bei RT für 16h getrocknet.
Auswaage: 17,5g
Farbe: rostbraun
Feststoffkonzentration: 3,2%
Raumzeitausbeute: 32,3 kg/m²/d
Ausbeute bezogen auf Fe: 69,1%

### Analysen:

Langmuir OF (Voraktivierung 130°C): 419 m²/g (BET: 303 m²/g)

### Chemische Analyse:

| | |
|---|---|
| Kohlenstoff | 37.9 g/100g |
| Sauerstoff | 33.9 g/100g |
| Stickstoff | 7.1 g/100g |
| Fe | 15.0 g/100g |

### Beispiel 4 Zn-2,5-Furandicarbonsäure-MOF

### Versuchsvorschrift:

| **Einsatzstoff** | **Molar** | **berechnet** | **experimentell** |
|---|---|---|---|
| 1) Zinknitrat*4Wasser | 73,1 mmol | 19,5g | 19,5g |
| 2) 2,5-Furandicarbonsäure | 82,87 mmol | 12,9g | 12,9g |
| 3) DMF | 6,8 mol | 500,0g | 500,0g |

In einem 1l Vierhalskolben wird die Furandicarbonsäure und das Zinknitrat in dem DMF suspendiert. Die Lösung mit Feststoffanteil wird für 24h bei 130°C gekocht, wobei sich eine weiße Suspension bildet. Nach dem Abkühlen wird der weiße Niederschlag unter Stickstoffatmosphäre abfiltriert und 1-mal mit 200 ml DMF und 4-mal mit 200 ml Chloroform gewaschen. Der Filterkuchen wird im Hochvakuum bei RT für 16h getrocknet.
Auswaage: 15,6g
Farbe: weiß
Feststoffkonzentration: 2,9%
Raumzeitausbeute: 29,3 kg/m²/d
Ausbeute auf Zn: 54,1%

### Analysen:

Langmuir OF (Voraktivierung 130 °C): 3 m²/g (BET: 2 m²/g)

### Chemische Analyse:

| | |
|---|---|
| Kohlenstoff | 39.2 g/100g |
| Sauerstoff | 333.9 g/100g |
| Stickstoff | 5.7 g/100g |
| Wasserstoff | 3.9 g/100g |
| Zn | 17.1 g/100g |

### Beispiel 5 Cu-2,5-Furandicarbonsäure-MOF (nicht erfindungsgemäß)

### Versuchsvorschrift:

| **Einsatzstoff** | **Molar** | **berechnet** | **experimentell** |
|---|---|---|---|
| 1) Kupferchlorid*2Wasser | 73,1 mmol | 12,5g | 12,5g |
| 2) 2,5-Furandicarbonsäure | 82,87 mmol | 12,9g | 12,9g |
| 3) DMF | 6,8 mol | 500,0g | 500,0g |

In einem 1l Vierhalskolben wird die Furandicarbonsäure und das Kupferchlorid in dem DMF suspendiert. Die Lösung mit Feststoffanteil wird für 24h bei 130°C gekocht, wobei sich eine blaue Suspension bildet. Nach dem Abkühlen wird der blaue Niederschlag abfiltriert und 1-mal mit 200 ml DMF und 4-mal mit 200 ml Methanol gewaschen. Der Filterkuchen wird im Hochvakuum bei RT für 16h getrocknet.
Auswaage: 2,5g
Farbe: blau
Feststoffkonzentration: 0,5%
Raumzeitausbeute: 7,6 kg/m²/d
Ausbeute bezogen auf Cu: 9,6%

### Analysen:

Langmuir OF (Voraktivierung 130 °C): 307 m²/g (BET: 227 m²/g)

### Chemische Analyse:

| | |
|---|---|
| Kohlenstoff | 36.2 g/100g |
| Sauerstoff | 32.7 g/100g |
| Stickstoff | 5.6 g/100g |
| Cu | 17.9 g/100g |

### Beispiel 6 Al-2,5-Thiophendicarbonsäure-MOF

### Apparatur:

500ml Vierhalskolben
Intensivkühler
Ölbad
Rührer PTFE ummantelt
Thermometer
Stickstoff-Abdeckung

### Ansatz:

| | **Molare Mas** | **Ansatz** | | **Bemerkung** |
|---|---|---|---|---|
| | | | | |
| 2,5 Thiophenedicarbonsäure | 172,16g/mol | 23,20 mmol | 3,99 g | |
| Aluminiumchlorid x 6 Wasser | 241,43g/mol | 13,65 mmol | 3,33 g | w=99% |
| DMF | 73,0 | 1904 mmol | 138,99 g | 146 ml |
| | | | | D = 0,95 g/cm³ |
| | | | | |
| **Temperatur**: | 130°C / Rückfluss | | | |
| **Dauer:** | 24 Stunden | | | |

### Durchführung:

146 ml N,N Dimethylformamid im Vierhalskolben vorlegen und unter Rühren 3,99 g Thiophenedicarbonsäure (1) und 3,33 g Aluminiumchlorid x 6 Wasser; (2) bei Raumtemperatur eintragen. Es entsteht eine farblose Lösung. Anschließend wird das Reaktionsgemisch auf 130°C (Rückfluss) erhitzt. Das Reaktionsgemisch wird 24 h bei 130°C gehaltenhalten und danach auf RT abgekühlt.
Die weiße Suspension / Niederschlag wird über eine Glasfilternutsche Nr. 3 abgetrennt, wobei diese sich gut filtrieren lässt.

### DMF - Waschung:

Der Filterkuchen wird mit 100 ml N,N DMF aufgeschlämmt,15 Minuten Einwirkzeit, im Anschluss daran abgesaugt. Die Prozedur wird 2 x mit je 100 ml DMF wiederholt.

### Methanol - Waschung:

Anschließend wird der Filterkuchen mit 100 ml Methanol p.A. aufgeschlämmt, 15 Minuten Einwirkzeit, im Anschluß daran abgesaugt. Die Prozedur wird 4 x mit je 100 ml Methanol p.A. wiederholt.

### Trocknung:

Der Filterkuchen wird 24 Stunden bei 130°C im Vacuum - Trockenschrank < 20 mbar getrocknet.
Farbe: farblos
Auswaage: 3,1 g
**Analytik:**
BET/LM: 1021/1375 m²/g

### Allgemeine Daten:

Ausbeute (Linker): 62,5 %
Ausbeute (Metall-Salz): 105,8 %
Feststoffgehalt (Produkt): 2,2 Gew%
RaumZeitAusbeute: 21,2 kg/m³/d

## Patentansprüche

1. Poröses metallorganisches Gerüstmaterial enthaltend mindestens eine an mindestens ein Metallion koordinativ gebundene mindestens zweizähnige organische Verbindung, wobei sich die mindestens eine mindestens zweizähnige organische Verbindung von 2,5-Furandicarbonsäure oder 2,5-Thiophendicarbonsäüre ableitet und das mindestens eine Metallion das Ion eines Metalles ausgewählt aus der Gruppe bestehend aus Al, Mg, und Zn ist.

2. Formkörper enthaltend ein Gerüstmaterial nach Anspruch 1

3. Verfahren zur Herstellung eines Gerüstmaterials nach Anspruch 1, die Schritte enthaltend
(a) Umsetzen eines Reaktionsgemisches enthaltend ein dem mindestens einen Metallion entsprechendes Metallsalz und 2,5-Furandicarbonsäure beziehungsweise 2,5-Thiophendicarbonsäure sowie einem Lösemittel bei einer Temperatur im Bereich von 100°C bis 150°C für mindestens 3 Stunden und
(b) Abtrennen des ausgefallenen Feststoffes.

4. Verfahren nach Anspruch 3, **dadurch gekennzeichnet, dass** die Anfangskonzentration des Metallsalzes im Reaktionsgemisch, im Bereich von 0,05 mol/l bis 0,8 mol/l liegt.

5. Verfahren nach Anspruch 3 oder 4, **dadurch gekennzeichnet, dass** das Verhältnis der anfänglichen Stoffmenge an 2,5-Furandicarbonsäure beziehungsweise 2,5-Thiophendicarbonsäure zur anfänglichen Stoffmenge an eingesetztem Metallsalz bezogen auf das Metall im Bereich zwischen 0,5:1 und 2: 1 liegt.

6. Verfahren nach einem der Ansprüche 3 bis 5, **dadurch gekennzeichnet, dass** das Lösemittel N,N-Dimethylformamid enthält.

7. Verwendung eines Gerüstmaterials nach Anspruch 1 oder eines Formkörpers nach Anspruch 2 zur Speicherung eines Gases.

8. Verwendung nach Anspruch 7, **dadurch gekennzeichnet, dass** das Gas Wasserstoff ist.

9. Verwendung eines Gerüstmaterials nach Anspruch 1 oder eines Formkörpers nach Anspruch 2 zur Abtrennung eines Gases aus einem Gasgemisch.

## Claims

1. A porous metal-organic framework comprising at least one at least bidentate organic compound coordinated to at least one metal ion, wherein the at least one at least bidentate organic compound is derived from 2,5-furandicarboxylic acid or 2,5-thiophenedicarboxylic acid and the at least one metal ion is the ion of a metal selected from the group consisting of Al, Mg, and Zn.

2. A shaped body comprising a framework according to claim 1.

3. A process for preparing a framework according to claim 1, which comprises the steps
(a) reaction of a reaction mixture comprising a metal salt corresponding to the at least one metal ion and 2,5-furandicarboxylic acid or 2,5-thiophenedicarboxylic acid and also a solvent at a temperature in the range from 100°C to 150°C for at least 3 hours and
(b) isolation of the precipitated solid.

4. The process according to claim 3, wherein the initial concentration of the metal salt in the reaction mixture is in the range from 0.05 mol/l to 0.8 mol/l.

5. The process according to claim 3 or 4, wherein the ratio of the initial molar amount of 2,5-furandicarboxylic acid or 2,5-thiophenedicarboxylic acid used to the initial molar amount of metal salt used, based on the metal, is in the range from 0.5:1 to 2:1.

6. The process according to any of claims 3 to 5, wherein the solvent comprises N,N-dimethylformamide.

7. The use of a framework according to claim 1 or of a shaped body according to claim 2 for storage of a gas.

8. The use according to claim 7, wherein the gas is hydrogen.

9. The use of a framework according to claim 1 or of a shaped body according to claim 2 for separating a gas from a gas mixture.

## Revendications

1. Matériau de squelette métallo-organique poreux contenant au moins un composé organique bivalent relié par coordination à au moins un ion métallique, ledit au moins un composé organique au moins bivalent dérivant d'acide 2,5-furanedicarboxylique ou d'acide 2,5-thiophènedicarboxylique et ledit au moins un ion métallique étant l'ion d'un métal choisi dans le groupe constitué par Al, Mg et Zn.

2. Corps moulé contenant un matériau de squelette selon la revendication 1.

3. Procédé de fabrication d'un matériau de squelette selon la revendication 1, comprenant les étapes suivantes :
(a) la mise en réaction d'un mélange réactionnel contenant un sel métallique correspondant audit au moins un ion métallique et de l'acide 2,5-furanedicarboxylique ou de l'acide 2,5-thiophènedicarboxylique, ainsi qu'un solvant, à une température dans la plage allant de 100 °C à 150 °C pendant au moins 3 heures, et
(b) la séparation du solide précipité.

4. Procédé selon la revendication 3, **caractérisé en ce que** la concentration initiale du sel métallique dans le mélange réactionnel se situe dans la plage allant de 0,05 mol/l à 0,8 mol/l.

5. Procédé selon la revendication 3 ou 4, **caractérisé en ce que** le rapport entre la quantité de matière initiale d'acide 2,5-furanedicarboxylique ou d'acide 2,5-thiophènedicarboxylique et la quantité de matière initiale de sel métallique utilisé par rapport au métal se situe dans la plage comprise entre 0,5:1 et 2:1.

6. Procédé selon l'une quelconque des revendications 3 à 5, **caractérisé en ce que** le solvant contient du N,N-diméthylformamide.

7. Utilisation d'un matériau de squelette selon la revendication 1 ou d'un corps moulé selon la revendication 2 pour le stockage d'un gaz.

8. Utilisation selon la revendication 7, **caractérisée en ce que** le gaz est l'hydrogène.

9. Utilisation d'un matériau de squelette selon la revendication 1 ou d'un corps moulé selon la revendication 2 pour la séparation d'un gaz à partir d'un mélange gazeux.
